# EUROPÄISCHE PATENTSCHRIFT

(11) **EP 1 834 401 B1**
(45) Veröffentlichungstag und Bekanntmachung des Hinweises auf die Patenterteilung: **28.09.2011**
(21) Anmeldenummer: 05803443.0
(22) Anmeldetag: 08.11.2005
(51) Int. Cl.: H02P 6/14, H02P 6/16, H02P 6/18

(54) **VERFAHREN UND SCHALTUNGSANORDNUNG ZUR GEBERLOSEN ERMITTLUNG DER ROTORPOSITION EINES BÜRSTENLOSEN GLEICHSTROMMOTORS**
METHOD AND CIRCUIT ARRANGEMENT FOR DETERMINATION OF THE ROTOR POSITION OF A BRUSHLESS DC MOTOR WITHOUT SENSORS
PROCEDE ET CIRCUIT POUR DETERMINER SANS APPAREIL TRANSMETTEUR LA POSITION DU ROTOR D'UN MOTEUR A COURANT CONTINU SANS BALAI

(30) Priorität: 27.12.2004 DE 102004062821
(43) Veröffentlichungstag der Anmeldung: 19.09.2007
(73) Patentinhaber: ROBERT BOSCH GMBH, 70442 Stuttgart (DE)
(72) Erfinder: HEIDRICH, Torsten, 71665 Vaihingen/Enz (DE); FASSNACHT, Jochen, 78713 Schramberg (DE)
(86) Internationale Anmeldenummer: PCT/EP2005/055804
(87) Internationale Veröffentlichungsnummer: WO 2006/069844

(56) Entgegenhaltungen:
- US-A1- 2002 097 014
- PATENT ABSTRACTS OF JAPAN Bd. 2000, Nr. 22, 9. März 2001 (2001-03-09) & JP 2001 136788 A (NIPPON DENSAN CORP), 18. Mai 2001 (2001-05-18)
- PATENT ABSTRACTS OF JAPAN Bd. 1996, Nr. 12, 26. Dezember 1996 (1996-12-26) & JP 08 223967 A (SHARP CORP), 30. August 1996 (1996-08-30)
- PATENT ABSTRACTS OF JAPAN Bd. 2002, Nr. 02, 2. April 2002 (2002-04-02) & JP 2001 275388 A (NEC KANSAI LTD), 5. Oktober 2001 (2001-10-05)

## Beschreibung

### Stand der Technik

Die Erfindung geht aus von einem Verfahren und einer Schaltungsanordnung zur geberlosen Ermittlung der Rotorposition sowie zum Betreiben eines bürstenlosen Gleichstrommotors nach dem Oberbegriff der Ansprüche 1 und 7.

Ein derartiges Verfahren und eine zugehörige Schaltungsanordnung zur Ermittlung der Rotorposition eines bürstenlosen Gleichstrommotors sind aus der DE 100 64 468 A bekannt, wobei ebenfalls zur Bestimmung der Rotorposition die induzierte Strangspannung zumindest eines Motorsstrangs ermittelt und mit einem Referenzwert verglichen wird. Als Referenzwert dient hierbei die Spannung des realen oder eines nachgebildeten Sternpunkts der Motorstränge, wobei vorgeschlagen wird, einen ermittelten Polaritätswert auf einen Einschaltpunkt zur Bestromung mindestens eines Motorstrangs zu synchronisieren und die Messung nach einer auf den Einschaltzeitpunkt folgenden, vorbestimmten Wartezeit durchzuführen. Die Ermittlung der Induzierten Spannungen mit Hilfe des ausgeführten Sternpunkts ist auch Gegenstand der Dokumente US 2002/0097014 und JP2001275388. Dieses Verfahren ist grundsätzlich so lange anwendbar, wie der Motor im sogenannten Grunddrehzahlbereich betrieben wird, wobei in der nicht bestromten Phase der Nulldurchgang der induzierten Spannung durch Komparatoren ermittelt und hieraus auf die Rotorlage geschlossen werden kann. Dabei gilt, dass der Vektor der induzierten Spannung senkrecht auf dem Magnetfeld steht, welches bei einem permanentmagnetisch erregten Gleichstrommotor rotorfest ist. Beim Betrieb mit höheren Drehzahlen muss jedoch zur Feldschwächung diese vorher unbestromte Phase bestromt werden, da der Stromvektor gegenüber der normalen Bestromung voreilen muss, um dem Feld des Rotors entgegenzuwirken und dieses zu verringern. Der Nulldurchgang der induzierten Spannung kann ab einer Verschiebung von mehr als 30°el nicht mehr durch die bekannte einfache Messschaltung ermittelt werden, was den Einsatzbereich des so gesteuerten Motors deutlich einschränkt. Zur Vermeldung der Messung der Strangströme schlägt das Dokument JP2001136788 vor, den Zwischenkreisstrom zu messen, um deraus die Kommutierungszeitpunkte zu bestimmen.

Der Erfindung liegt die Aufgabe zugrunde, ein verbessertes Verfahren und eine zugehörige Schaltungsanordnung zur geberlosen Ermittlung der Rotorposition sowie zum Betreiben eines vorzugsweise permanentmagnetisch erregten, bürstenlosen Gleichstrommotors anzugeben, wobei der Motor unter Verwendung preiswerter Schaltungsmittel mit guter Regelgenauigkeit sowohl im Grunddrehzahlbereich als auch insbesondere bei höheren Drehzahlen oberhalb seiner Nenndrehzahl betrieben werden kann, d.h. bei Drehzahlen, die unter Last nur durch ein Voreilen des Stromvektors von mehr als 30°el gegenüber dem der normalen Bestromung erreicht werden kann. Dadurch wird der Einsatzbereich dieser verhältnismäßig preiswerten Motoren deutlich erweitert.

Die vorgegebene Aufgabe wird gelöst durch die kennzeichnenden Merkmale der unabhängigen Verfahrens- und Schaltungsansprüche 1 und 7. Hierbei beruhen die getroffenen Maßnahmen im Wesentlichen darauf, dass zur Realisierung der erfindungsgemäßen Regelung ein Modell des Motorständers und ein Abgriff des Sternpunktes der Maschine verwendet werden, wobei die Ständerstreuinduktivitäten vernachlässigt werden. Dabei ist es unter Verwendung preiswerter analoger Differenzbildner und eines einzigen Stromsensors im Gleichspannungszwischenkreis möglich, für fest vorgegebene Zeitpunkte bei Kenntnis des Kommutierungsmusters des Motors allein durch Erfassung der relevanten Klemmenpotentiale sowie des Sternpunktpotentials der Ständerwicklung die Nulldurchgänge der direkt nicht messbaren induzierten Spannungen in den einzelnen Phasen zur Bestimmung der Kommutierungszeitpunkte zu ermitteln, auch wenn die jeweilige Phase im Feldschwächungsbetrieb Strom führt. Hierbei wird erfindungsgemäß der Steuereinheit ein aus dem dem Phasenstrom und dem Phasensummenstrom entsprechenden Zwischenkreisstrom abgeleitetes Triggersignal zugeführt zur Festlegung der Zeitpunkte für die Auswertung von Referenzwerten der in den einzelnen Phasen induzierten Spannungen. Aus deren Nulldurchgängen kann dann auf die Lage des Maschinenrotors geschlossen werden. Da die Messung jeweils beim Erreichen des Spitzenwertes des sägezahnförmig geregelten Motorstromes erfolgt und die Steuereinheit auf das jeweilige Erreichen des Spitzenwertes synchronisiert ist, kann auf die Erfassung der veränderlichen Phasenströme verzichtet werden. Die Nulldurchgänge der induzierten Spannungen werden ermittelt, indem die Differenz aus jeweils einer Phasenspannung und der Sternpunktspannung mit dem am bekannten Innenwiderstand der Phase durch den vorgegebenen Phasenstrom erzeugten Spannungsabfall verglichen wird. Hierbei erfolgt zweckmäßigerweise zunächst in einem Summierverstärker die Messung der Differenz aus jeweils einer Phasenspannung und der Sternpunktspannung und anschließend wird von dem hieraus gebildeten Ausgangssignal des Summierers jeweils in einem nachgeordneten Komparator der am inneren Widerstand der Phase durch den bekannten Phasenstrom erzeugte Spannungsabfall abgezogen und der Ausgang des Komparators auf jeweils einen Eingang der Steuereinheit für die Halbleiterschaltung geführt.

Der durch den Stromsensor im Gleichspannungszwischenkreis erfasste, im Kiloherz-Bereich pulsierende Strom wird in einem weiteren Komparator bei jedem Puls auf das Erreichen des vorgegebenen Referenzwertes durch Vergleich mit einer dem Referenzstrom entsprechenden Referenzspannung überwacht. Dieser weitere Komparator liefert dann jeweils bei Erreichen des Referenzwertes nach einer vorausgegangenen kurzen Freilaufphase des Stromes die Triggersignale für die Steuereinheit der Halbleiterschaltvorrichtung.

Weitere Einzelheiten und vorteilhafte Ausgestaltungen des erfindungsgemäßen Verfahrens und der zugehörigen Schaltungsanordnung ergeben sich aus den Unteransprüchen und den Darstellungen in den Zeichnungen. Diese zeigen in
Figur 1 eine Schaltungsanordnung zur geberlosen Ermittlung der Rotorposition sowie zum Betreiben eines bürstenlosen Gleichstrommotors mit einem permanentmagnetisch erregten Rotor und einer dreiphasigen, in Stern geschalteten Ankerwicklung, und
Figur 2 Diagramme der für die Messung relevanten Spannungen und Ströme an dem Motor, und
Figur 2a eine detailliertere Darstellung des Verlaufs des Motorstromes aus Figur 2.

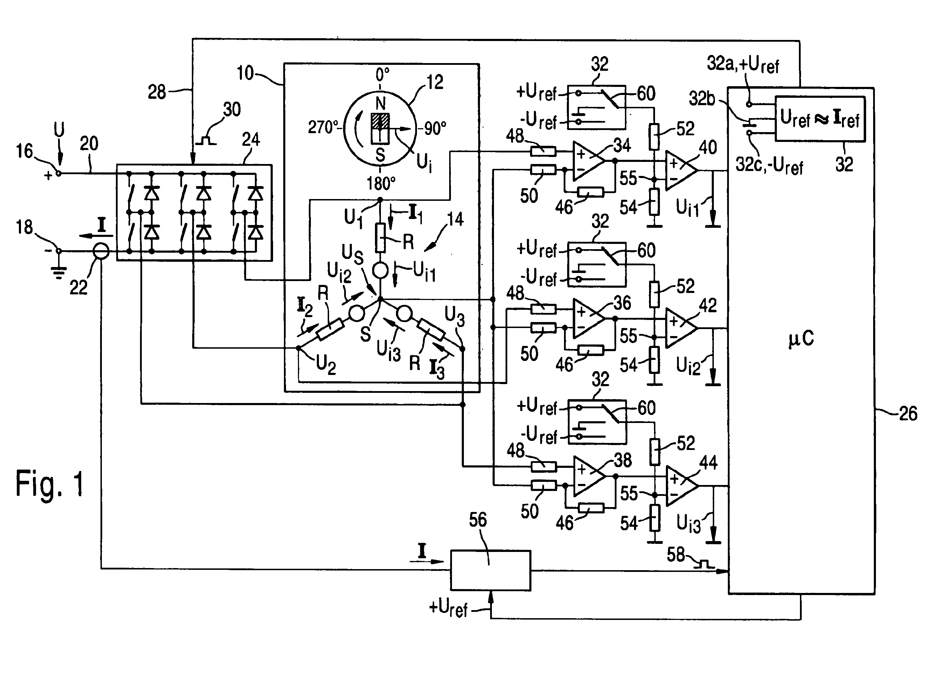

In Figur 1 ist mit 10 ein bürstenloser Gleichstrommotor bezeichnet mit einem permanentmagnetisch erregten Rotor 12 und einem dreiphasigen, in Stern geschalteten Stator 14. Die Spannungsversorgung des Motors 10 erfolgt aus einer Gleichspannungsquelle mit einer Spannung U von zum Beispiel 12V mit einem Pluspol 16 und einem an Masse liegenden Minuspol 18. Die Gleichspannungsquelle speist den Motor 10 über einen nicht näher dargestellten Gleichspannungszwischenkreis 20, in dem ein Stromsensor 22 angeordnet ist zur Erfassung des Phasensummenstroms I. Das sukzessive Anschließen der einzelnen Wicklungsphasen des Stators 14 an das Gleichspannungsnetz erfolgt über eine Halbleiterschaltvorrichtung 24 in Form eines dreiphasigen Wechselrichters in Vollbrückenschaltung in bekannter Bauweise mit jeweils zwei in Reihe liegenden Halbleiterschaltern pro Phase und jeweils einer Freilaufeinrichtung für den Motorstrom parallel zu den einzelnen Halbleiterschaltern. Anschlussleitungen von den Verbindungen zwischen den in Reihe liegenden Halbleiterschaltern und den in Reihe liegenden Freilaufeinrichtungen versorgen die Stränge des Motors mit den Spannungen U₁, U₂ und U₃. Die Innenwiderstände der einzelnen, mit dem Sternpunkt S verbundenen Phasen des Stators 14 sind gleich und jeweils mit R bezeichnet, die im Betrieb in den einzelnen Phasen induzierten Spannungen sind symbolisch durch Spannungsquellen Uᵢ₁, Uᵢ₂ und Uᵢ₃ gekennzeichnet.

Die Steuerung der Halbleiterschaltvorrichtung 24 erfolgt durch eine Steuereinheit 26 in Form eines Mikrocontrollers, welche über eine Leitung 28 die Halbleiterschaltvorrichtung 24 mit Schaltsignalen 30 entsprechend einem vorgegebenen Kommutierungsmuster versorgt. In die Steuereinheit 26 ist eine Referenzspannungsquelle 32 integriert, welche entsprechend dem durch die angetriebene Last und die vorgegebene Drehzahl bestimmten Motorstrom I_{ref} und dem bekannten Innenwiderstand R der Phasen eine Referenzspannung U_{ref} erzeugt. Die Referenzspannungsquelle 32 besitzt drei Ausgänge 32a, 32b und 32c, wobei am Ausgang 32a die positive Referenzspannung, am Ausgang 32c die negative Referenzspannung und am Ausgang 32b eine Masseverbindung ansteht. Die Ansteuerung der drei verschiedenen Ausgänge erfolgt durch einen Schalter 60 anhand des Kommutierungsmusters für die verschiedenen Halbbrücken der Halbleiterschaltvorrichtung 24.

Zwischen dem Motor 10 und der Steuereinheit 26 liegt die eigentliche Erfassungseinrichtung für die in den Phasen des Stators 14 induzierten Spannungen, welche die für die Ansteuerung der Halbleiterschaltvorrichtung 24 erforderliche Detektion der Lage des Rotors 12 mit einfachen Komparatoren ermöglicht. Hierzu gehören je ein Summierer 34, 36 und 38 sowie je ein Komparator 40, 42 und 44. Die Summierer liegen mit ihrem nicht invertierenden Eingang jeweils am Phasenanschluss U₁, U₂ und U₃ des Stators, mit ihren invertierenden Eingängen sind sie gemeinsam mit dem Sternpunkt S des Stators verbunden, wobei der Ausgang jedes Summierers in geeigneter Weise auf seinen invertierenden Eingang rückgekoppelt und jeweils beide Eingänge mit passenden Vorwiderständen beschaltet sind. Die Rückkopplungswiderstände sind mit 46, die Vorwiderstände am nicht invertierenden Eingang mit 48 und die Vorwiderstände am invertierenden Eingang mit 50 bezeichnet. Am Ausgang der Summierer 34, 36, 38 liegt somit jeweils eine Spannung entsprechend der Differenz aus der Phasenspannung und der Sternpunktspannung an, welche anschließend zur Bestimmung der in der Phase induzierten Spannung noch um den am Innenwiderstand R der Phase durch den jeweiligen Phasenstrom I₁, I₂, I₃ erzeugten Spannungsabfall vermindert werden muss. Dies geschieht in den nachgeordneten Komparatoren 40, 42 und 44, deren nicht invertierende Eingänge jeweils mit dem Ausgang der Summierer 34, 36 und 38 verbunden sind, während ihre invertierenden Eingänge am Abgriff jeweils eines Spannungsteilers mit den Widerständen 52 und 54 liegen. Die Widerstände 52 sind dabei mit ihrem anderen Ende jeweils mit der Referenzspannungsquelle 32 verbunden, die Widerstände 54 liegen an Masse. Die von der Referenzspannungsquelle 32 gelieferte Referenzspannung U_{ref} muss dabei nicht dem Wert I_{ref}xR entsprechen, dieser Spannungswert kann auch über die Widerstände 52 und 54 der Spannungsteiler nachgebildet werden.

Die Ausgänge der Komparatoren 40, 42 und 44 liefern die Signale für die in den einzelnen Phasen induzierten Spannungen Uᵢ₁, Uᵢ₂ und Uᵢ₃ an die Steuereinheit 26, welche die positive Referenzspannung +U_{ref} der Referenzspannungsquelle 32 als Vergleichswert auch an einen weiteren Komparator 56 anlegt, der eingangsseitig mit dem Stromsensor 22 und ausgangsseitig mit der Steuereinheit 26 verbunden ist.

Die Schaltungsanordnung arbeitet folgendermaßen:

Das Kommutierungsmuster für die Stromversorgung des Motors 10 durch die Halbleiterschaltvorrichtung 24 ist in der Steuereinheit 26 vorgegeben und derart gestaltet, dass jeweils zwei Phasen der Maschine bestromt werden und die dritte Phase stromlos bleibt. Hierzu wird beispielsweise ein Spannungsvektor U₁ vom Pluspol 16 über den Gleichspannungszwischenkreis 20 und den oberen Halbleiterschalter an die Statorphase 1 angelegt und der Strom darin solange erhöht, bis der durch die Steuereinheit 26 entsprechend der angeschlossenen Last vorgegebene Referenzwert I_{ref} erreicht ist. Danach wird von der Steuereinheit 26 für eine vorgegebene kurze Zeit ein Nullspannunsvektor angelegt und die Phase kurzzeitig im Freilauf betrieben, bevor die Phasenspannung U₁ bei Beginn eines neuen Stromregelungszyklus wieder angelegt und der Referenzstrom I_{ref} erneut erreicht wird. Der Phasenstrom fließt dann über den Sternpunkt S und mit seinem negativen Wert als Phasenstrom I₂ zur Anschlussklemme der Phase 2 und von dort über den unteren Halbleiterschalter und den Stromsensor 22 zurück zum Minuspol 18, beziehungsweise zur Masse des Gleichspannungsnetzes. Die Phase 3 bleibt zunächst unbestromt. Der durch die Bestromung der Phasen 1 und 2 entstehende Fluss erzeugt mit dem vom Permanentmagneten des Rotors 12 erzeugten Fluss das erforderliche Drehmoment, wobei in einem dreiphasigen Stator in bekannter Weise jeweils nach 60°el. die Bestromung in einer Phase weitergeschaltet wird.

Die Erfassung der induzierten Spannung Uᵢ₃ ist im Grunddrehzahlbereich unkritisch, da in der Phase 3 kein Strom fließt, somit auch kein Spannungsabfall am Innenwiderstand R der induzierten Spannung überlagert wird und der Nulldurchgang ohne Schwierigkeit ausgehend von einer Startlage als Kriterium für die Rotorlage erfasst werden kann.

Im Feldschwächebereich oberhalb der Nenndrehzahl des Motors ändert sich das Bestromungsmuster, da jetzt im Stator ein resultierender Fluss erzeugt wird, welcher dem Rotorfluss um mehr als 90° voreilt. Dies bedeutet, dass zur Erzeugung des erforderlichen Drehmomentes nun statt der Phase 2 die Phase 3 bestromt wird, während die Phase 2 stromlos bleibt. Das Kommutierungsmuster muss also dahingehend verändert werden, dass der Phasenstrom als positiver Strom I₁ über den Sternpunkt und weiter mit seinem negativen Wert als Phasenstrom I₃ zurück zur Masse fließt. In diesem Drehzahlbereich ist also die als Messphase verwendete Phase 3 bestromt, sodass sich der induzierten Spannung *Uᵢ₁ ein Spannungsabfall am Innenwiderstand R überlagert und das Messergebnis verfälscht, wenn er bei der Auswertung nicht berücksichtigt wird. Entsprechendes gilt für die weiteren Bestromungsvorgänge der anderen Phasen, beziehungsweise Phasenkombinationen.

Das erfindungsgemäße Verfahren macht sich nun die Tatsache zunutze, dass der Strom I durch die Statorphasen kein reiner Gleichstrom ist sondern von der Steuereinheit 26 sägezahnartig zwischen jeweils einem Maximum und einem Minimum auf den vorgegebenen Durchschnittswert geregelt wird. Hierbei wird jeweils die Phasenspannung so lange an die Statorphasen angelegt, bis der von der Steuereinheit 26 vorgegebene maximale Stromwert I_{ref} erreicht ist. Danach öffnet der obere stromführende Schalter der Halbleiterschaltvorrichtung 24 und es folgt eine zeitlich festgesetzte, kurze Freilaufphase über zwei der unteren Halbleiterschalter, bevor die bestromte Phase bis zum erneuten Erreichen des vorgegebenen Referenzwertes I_{ref} wieder mit der Phasenspannung beaufschlagt wird. Da in einer Sternpunktschaltung der Phasenstrom unter Berücksichtigung des Vorzeichens dem Phasensummenstrom I und dem Zwischenstromkreis entspricht kann dieser sägezahnartige Verlauf des Phasenstromes in dem Stromsensor 22 erfasst und in dem Komparator 56 durch Vergleich mit dem Referenzwert +U_{ref} der jeweilige Zeitpunkt des Erreichens des vorgegebenen, in seiner Höhe bekannten Referenzstromes I_{ref} ermittelt und als Triggersignal 58 an die Steuereinheit 26 geführt werden.

Der entsprechend der vom Motor geforderten Leistung vorgegebene Referenzstrom I_{ref} ist ebenso wie der Innenwiderstand R der Motorphasen bekannt. So kann durch die Referenzspannungsquelle 32 im Rhythmus der Phasenstromregelung eine definierte Referenzspannung U_{ref} zur Verfügung gestellt werden, und zwar als positiver Wert bei positiver Stromrichtung, als negativer Wert bei negativer Stromrichtung und als Masse für die nicht bestromte Phase. Diese Referenzspannung wird nun vorzeichenrichtig entsprechend dem in der Steuereinheit 26 vorliegenden Kommutierungsmuster als positiver, beziehungsweise negativer Wert oder als Masseverbindung über einen Schalter 60 der Referenzspannungsquelle 32 in der jeweils dem Kommutierungsmuster entsprechenden Zuordnung an die Spannungsteiler 52, 54 der verschiedenen Phasen angelegt. Hieraus folgt eine dem vorgegebenen Kommutierungsmuster entsprechende Spannung jeweils am Verbindungspunkt 55 der Spannungsteiler und somit am invertierenden Eingang der Komparatoren 40, 42 und 44. Durch die Differenzbildung mit der Ausgangsspannung der Summierer 34, 36 und 38 liegt dann jeweils im Zeitpunkt des Erreichens des Referenzstromes I_{ref} am Ausgang der Komparatoren 40, 42 und 44 ein korrektes Signal an für die induzierte Spannung als Differenz aus der Phasenspannung, der Sternpunktspannung und dem bestromungsbedingten inneren Spannungsabfall an der Phase.

In der dargestellten Grundbeschaltung der Komparatoren 40, 42 und 44 liegen die induzierten Spannungen Uᵢ₁, Uᵢ₂ und Uᵢ₃ jeweils als HIGH- beziehungsweise LOW- Signal vor, wobei die Flanken beim Wechsel des Signals die Nulldurchgänge der induzierten Spannungen definieren. Die Regelfrequenz des Motorstromes ist dabei hoch gegenüber dem drehzahlbedingten Wechsel der Versorgungsspannungen an den einzelnen Phasen des Motors, sodass der Zeitraum zwischen zwei Flankenwechseln der Signale der induzierten Spannung entsprechend der Taktung durch den Komparator 56 als Kennzeichnung des Nulldurchgangs der induzierten Spannungen hinreichend genau ist.

Mit dem vorgeschlagenen Messverfahren erübrigt sich eine aufwendige Messung der Phasenströme in den einzelnen Strängen des Stators 14. Im Zeitpunkt des Erreichens des jeweils durch den Betriebszustand des Motors 10 bekannten Referenzstromes I_{ref} kann ohne Messung eine entsprechende Referenzspannung U_{ref} bereitgestellt und entsprechend den Triggersignalen des Komparators 56 abgerufen werden. Das Ergebnis der Nulldurchgangsdetektion der in den Statorphasen induzierten Spannungen ist zum Umschaltzeitpunkt des Komparators 56 bei Erreichen des Referenzstromes I_{ref} korrekt. An Hand der Nulldurchgänge der induzierten Spannungen kann dann ermittelt werden, in welchem der sechs Sektoren pro Umdrehung des Rotors 12 sich der Rotorfluss und somit die Rotorposition gerade befindet. Bei jedem der beiden Nulldurchgänge jeder Phase gemäß den Flankenwechseln der Ausgangssignale der Komparatoren 40, 42 und 44 wird dabei jeweils ein Sektorwechsel zur Bestimmung des Schaltmusters der geberlosen Drehzahlregelung detektiert.

Das vorgeschlagene Verfahren funktioniert jedoch erst, nachdem der Motor 10 angelaufen und mindestens ein erster Sektorwechsel stattgefunden hat. Der Startvorgang des Motors muss daher mit einem anderen bekannten geberlosen Verfahren durchgeführt werden, weil eine sensorlose Winkelerkennung auf der Basis der induzierten Spannung der Rotorposition nur bei drehendem Motor erfolgen kann. Bekannte Verfahren hierfür sind der Schrittmotorhochlauf, der Impulsanlauf und der Synchronanlauf. Letzterer ist verhältnismäßig aufwendig, weil der Motor hierfür wie ein Synchronmotor mit drei um 120° elektrischen versetzten Sinusströmen hochgefahren werden muss, deren Realisierung einen Zusatzaufwand erfordert. In jedem Fall ist es zunächst erforderlich, den Rotor 12 durch eine feste Bestromung zweier Stränge in eine definierte Ausgangslage auszurichten. Anschließend erfolgt beim Impulsanlauf dann ein einmaliges Bestromen des nächsten oder übernächsten Kommutierungsmusters durch einen kurzen Stromimpuls und eine Beobachtung der Nulldurchgänge, bevor auf sensorlosen Betrieb umgeschaltet werden kann. Alternativ kann entsprechend dem Schrittmotorhochlauf auch zunächst ein gesteuertes Drehfeld sehr niedriger, vorzugsweise über der Zeit leicht ansteigender Frequenz erzeugt und dann auf eine Selbstführung umgeschaltet werden, sobald die induzierten Spannungen Uᵢ₁, Uᵢ₂ und Uᵢ₃ eine Lageerkennung ermöglichen.

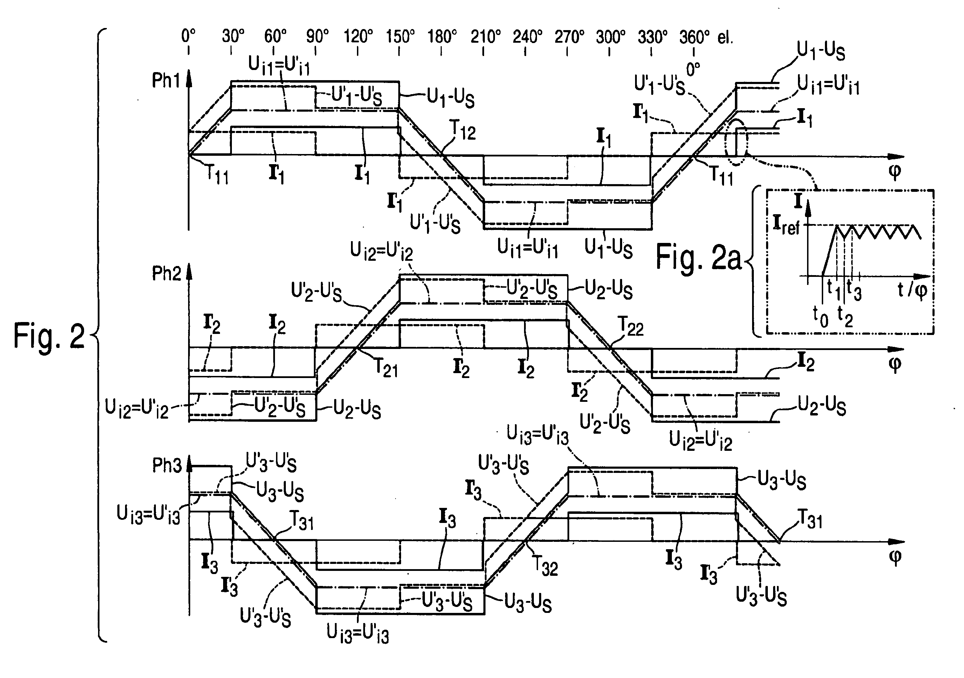

Figur 2 zeigt Diagramme der induzierten Spannung sowie der Phasenströme und der Differenzspannungen am Ausgang der Summierer 34, 36 und 38, einerseits im Grunddrehzahlbereich (durchgezogene Linien) und andererseits bei erhöhter Drehzahl durch Feldschwächung (gestrichelte Linien). Die Phasenströme im Grunddrehzahlbereich sind mit I₁, I₂ und I₃ bezeichnet, im Feldschwächungsbereich mit I₁', I₂' und I₃'. Entsprechend sind die induzierten Spannungen im Grunddrehzahlbereich mit Uᵢ₁, Uᵢ₂ und Uᵢ₃ und im Feldschwächungsbereich mit Uᵢ₁', Uᵢ₂' und Uᵢ₃' bezeichnet. Im Ausführungsbeispiel haben die induzierten Spannungen Uᵢₓ und Uᵢₓ' die gleiche Größe. Die Nulldurchgänge in Phase 1 sind mit T₁₁ und T₁₂, in Phase 2 mit T₂₁ und T₂₂ und in Phase 3 mit T₃₁ und T₃₂ bezeichnet. Während nun im Grunddrehzahlbereich die Phasen zum Zeitpunkt der Nulldurchgänge der induzierten Spannungen unbestromt sind, fließen zum Zeitpunkt der Nulldurchgänge der induzierten Spannungen im Feldschwächungsbereich bei erhöhten Drehzahlen die Phasenströme I₁',I₂' und I₃', welche bei der Ermittlung der Rotorposition berücksichtigt werden müssen.

Die Darstellung der Ströme und der Spannungen in Figur 2 ist stark schematisiert. Zur Erläuterung des erfindungsgemäßen Verfahrens hinsichtlich der Triggerung der Steuereinheit 26 durch den Komparator 56 ist daher beispielhaft noch der tatsächliche Verlauf des Stromes I im Schaltzeitpunkt in Figur 2a detaillierter dargestellt. Man erkennt hieraus, dass der mittels des Stromsensors 22 erfasste, mit dem Phasensummenstrom übereinstimmende, geregelte Zwischenkreisstrom I vom Einschaltzeitpunkt t₀ bis zum Erreichen des von der Steuereinheit 26 vorgegebenen Referenzstromes I_{ref} im Zeitpunkt t₁ zunächst ansteigt. Danach wird die treibende Spannung U₁ abgeschaltet und es folgt eine kurze Freilaufphase zwischen den Zeitpunkten t₁ und t₂, wobei die oberen Schalter der Halbleiterschaltvorrichtung 24 geöffnet und die unteren Schalter geschlossen sind. Im Zeitpunkt t₂ wird dann der jeweils zugehörige obere Schalter der Halbleiterschaltvorrichtung 24 durch die Steuereinheit 26 wieder geschlossen und der Phasenstrom steigt erneut an bis zum Erreichen des Referenzwertes I_{ref} zum Zeitpunkt t₃. Dieser Vorgang wiederholt sich während der gesamten Bestromungsdauer der jeweiligen Phase mit einer Frequenz von etwa 10 kHz, welche erfindungsgemäß zur Triggerung der Steuereinheit 26 durch den Komparator 56 für eine korrekte Erfassung der Messwerte der induzierten Spannungen ausgenutzt wird. Der eingestellte Referenzstrom Iref ist vorgegeben und bekannt und somit ist auch der in diesem Augenblick am Innenwiderstand der Phasen jeweils entstehende Spannungsabfall ohne Messung definiert.

Das erfindungsgemäße Verfahren und die zugehörige Schaltvorrichtung sind im vorhergehenden an Hand eines dreiphasigen Motors erläutert, der Vorschlag kann jedoch ebenso auf Statoranordnungen mit höherer Phasenzahl, beispielsweise auf einen vierphasigen oder sechsphasigen Motor übertragen werden, sofern dieser eine Wicklung in Sternschaltung aufweist. Weiterhin ist die permanentmagnetische Erregung des Rotors nicht zwingend, die gleichen Maßnahmen können auch bei einem elektrisch erregten Rotor Anwendung finden. Als Steuereinheit 26 eignet sich statt eines Mikrocontrollers beispielsweise auch ein digitaler Signalprozessor.

## Patentansprüche

1. Verfahren zur geberlosen Ermittlung der Rotorposition sowie zum Betreiben eines bürstenlosen Gleichstrommotors (10) mit einem vorzugsweise permanentmagnetisch erregten Rotor (12) und mit einer vorzugsweise dreiphasigen, in Stern geschalteten Ankerwicklung, sowie mit einer Steuereinheit (26) für eine Halbleiterschaltvorrichtung (24) zum sukzessiven Anschließen der Wicklungen des Gleichstrommotors (10) an ein Gleichspannungsnetz (16, 18) in Abhängigkeit von der Rotorsposition, wobei ein aus der Differenz jeweils einer Phasenspannung (Uₓ, mit x = 1, 2, 3) und einer Sternpunktspannung (Uₛ) gebildetes Ausgangssignal eines Summierers (34, 36, 38) in einem nachgeordneten Komparator (40, 42, 44) mit einem Spannungswert für den am inneren Widerstand (R) der Phase durch einen vorgegebenen Phasenstrom (I_{ref}) erzeugte Spannungsabfall verglichen und hieraus die induzierten Spannungen (Uᵢₓ, mit x = 1, 2, 3) und deren Nulldurchgänge bestimmt werden, **dadurch gekennzeichnet, dass** der Steuereinheit (26) ein aus einem Phasensummenstrom (I) abgeleitetes Triggersignal (58) zugeführt wird zur Festlegung der Zeitpunkte für die Erfassung von Referenzwerten der in den einzelnen Phasen induzierten Spannungen (Uᵢₓ) als Kriterium für die Erzeugung von Kommutierungssignalen (30) für die Halbleiterschaltvorrichtung (24) oder als Lagesignal für die Rotorposition, wobei zur Nachbildung des durch den Referenzwert (I_{ref}) des Motorstromes (Iₓ, mit x = 1, 2, 3) in einer Phase erzeugten Spannungsabfalls eine Referenzspannungsquelle (32) verwendet wird, deren Spannung (+/-U_{ref}, Masse) dem durch den Motorstrom (Iₓ) in der Phase im Zeitpunkt des Erreichens seines Referenzwertes (I_{ref}) erzeugten Spannungsabfall proportional ist.

2. Verfahren nach Anspruch 1, **dadurch gekennzeichnet, dass** die Phasenströme (Iₓ) und der Phasensummenstrom (I) durch einen Stromsensor (22) im Gleichspannungszwischenkreis (20) der Halbleiterschaltvorrichtung (24) ermittelt werden.

3. Verfahren nach Anspruch 1 oder 2, **dadurch gekennzeichnet, dass** der durch den Stromsensor (22) erfasste Phasensummenstrom (I) in einem weiteren Komparator (56) auf das Erreichen eines entsprechend dem geforderten Drehmoment und der Drehzahl vorgebbaren Referenzwertes (I_{ref}) überwacht wird, wobei der weitere Komparator (56) jeweils bei Erreichen des Referenzwertes (U_{ref}) das Triggersignal für die Steuereinheit (26) liefert.

4. Verfahren nach einem der vorhergehenden Ansprüche, **dadurch gekennzeichnet, dass** die Spannung (+U_{ref}) der Referenzspannungsquelle (32) dem weiteren Komparator (56) als Vergleichswert dient bei der Bildung der Triggersignale (58) für die Steuereinheit (26).

5. Verfahren nach einem der vorhergehenden Ansprüche, **dadurch gekennzeichnet, dass** die Referenzspannungsquelle (32) über getrennte Spannungsteiler (52, 54) für jede Phase mit dem Masseanschluss des Gleichspannungsnetzes (16, 18) verbindbar ist, wobei ein Teileranschluss (55) der Spannungsteiler (52, 54) jeweils dem invertierenden Eingang der Komparatoren (40, 42, 44) einen Referenzwert für den durch das Kommutierungsmuster vorgegebenen Strom liefert, während der nicht invertierende Eingang der Komparatoren (40, 42, 44) mit dem der Differenz aus der Phasenspannung (Uₓ) und der Sternpunktspannung (Uₛ) entsprechenden Spannungswert vom Ausgang des zugeordneten Summierers (34, 36, 38) beaufschlagt wird.

6. Verfahren nach einem der vorhergehenden Ansprüche, **gekennzeichnet durch** die Verwendbarkeit sowohl im Grunddrehzahlbereich als auch im Feldschwächungsbereich des Motors (10) bei Drehzahlen oberhalb seiner Nenndrehzahl.

7. Schaltungsanordnung zur geberlosen Ermittlung der Rotorposition und zum Betreiben eines bürstenlosen Gleichstrommotors (10) mit einem vorzugsweise permanentmagnetisch erregten Rotor und mit einer vorzugsweise dreiphasigen, in Stern geschalteten Ankerwicklung, sowie mit einer Steuereinheit (26) für eine Halbleiterschaltvorrichtung (24) zum sukzessiven Anschließen der Wicklungsphasen des Gleichstrommotors an ein Gleichspannungsnetz (16, 18) in Abhängigkeit von der Rotorsposition, wobei die Steuereinheit (26) über jeweils einen Summierer (34, 36, 38) für die Phasenspannung (Uₓ, mit x = 1, 2, 3) und die Sternpunktspannung (Uₛ) sowie über jeweils einen Komparator (40, 42, 44) zum Vergleich der Ausgangspannung des Summierers (34, 36, 38) mit einem Referenzwert (U_{ref}) für den am inneren Widerstand (R) der Phase durch einen vorgegebenen Phasenstrom (I_{ref}) erzeugten Spannungsabfall angeschlossen ist, **dadurch gekennzeichnet, dass** Triggersignale (58) zur Erfassung der induzierten Spannungen (Uᵢ) durch die Steuereinheit (26) zum Zeitpunkt des Erreichens des vorgegebenen Motorstromes (I_{ref}) von einem weiteren Komparator (56) geliefert werden, welcher einerseits mit einem Stromsensor (22) im Gleichspannungszwischenkreis (20) des Motors (10) und andererseits mit einer Referenzspannungsquelle (32) für den vom Motorstrom (Iₓ, mit x = 1, 2, 3) in den Phasen verursachten Spannungsabfall verbunden ist, wobei die Spannung (+/- U_{ref}, Masse) der Referenzspannungsquelle (32) dem durch den Motorstrom (Iₓ) in der Phase zum Zeitpunkt des Erreichens seines Referenzwertes (I_{ref}) erzeugten Spannungsabfall proportional ist.

8. Schaltungsanordnung nach Anspruch 7, **dadurch gekennzeichnet, dass** die induzierten Spannungen (Uᵢ) durch analoge Differenzbildner (34, 36, 38, 40, 42, 44) ermittelt werden.

9. Schaltungsanordnung nach Anspruch 7 oder 8, **dadurch gekennzeichnet, dass** die Referenzspannungsquelle (32) über getrennte Spannungsteiler (52, 54) für jede Phase mit dem Masseanschluss des Gleichspannungsnetzes (16, 18) verbunden ist.

10. Vorrichtung nach einem der Ansprüche 7 bis 9, **dadurch gekennzeichnet, dass** ein Teileranschluss (55) der Spannungsteiler (52, 54) jeweils mit dem invertierenden Eingang eines Komparators (40, 42, 44) verbunden ist, dessen nicht invertierender Eingang am Ausgang des zugeordneten Summierers (34, 36, 38) liegt und dessen Ausgang mit der Steuereinheit (26) für die Halbleiterschaltvorrichtung (24) verbunden ist.

## Claims

1. Method for determining the rotor position without sensors and for operating a brushless DC motor (10) having a rotor (12) preferably with permanent-magnet excitation, and having a preferably three-phase armature winding which is connected in star, and also having a control unit (26) for a semiconductor switching apparatus (24) for successively connecting the windings of the DC motor (10) to a DC voltage power supply system (16, 18) as a function of the rotor position, with an output signal, which is formed from the difference between in each case a phase voltage (Uₓ, where x = 1, 2, 3), and a star point voltage (Uₛ), from an adder (34, 36, 38) being compared in a downstream comparator (40, 42, 44) with a voltage value for the voltage drop which is generated across the internal resistor (R) of the phase by a predefined phase current (I_{ref}), and the induced voltages (Uᵢₓ) and (Uᵢₓ, where x = 1, 2, 3) the zero crossings of the said voltages being determined from the said comparison, **characterized in that** a trigger signal (58) which is derived from a total phase current (I) is supplied to the control unit (26) for the purpose of defining the times for detection of reference values of the voltages (Uᵢₓ), where α = 1, 2, 3, which are induced in the individual phases, as a criterion for generating commutation signals (30) for the semiconductor switching apparatus (24) or as a position signal for the rotor position, with a reference voltage source (32) being used for simulating the voltage drop which is generated in a phase by the reference value (I_{ref}) of the motor current (Iₓ, where x = 1, 2, 3), the voltage (+/-U_{ref}, earth) of the said reference voltage source being proportional to the voltage drop which is generated by the motor current (Iₓ) in the phase at the time at which the reference value (I_{ref}) of the said motor current is reached.

2. Method according to Claim 1, **characterized in that** the phase currents (Iₓ) and the total phase current (I) are determined by a current sensor (22) in the DC voltage intermediate circuit (20) of the semiconductor switching apparatus (24).

3. Method according to Claim 1 or 2, **characterized in that** the total phase current (I) which is detected by the current sensor (22) is monitored in a further comparator (56) to determine when a reference value (I_{ref}) which is predefined in accordance with the required torque and the rotation speed is reached, with the further comparator (56) supplying the trigger signal for the control unit (26) each time the reference value (U_{ref}) is reached.

4. Method according to one of the preceding claims, **characterized in that** the voltage (+U_{ref}) of the reference voltage source (32) serves as a comparison value for the further comparator (56) when the trigger signals (58) for the control unit (26) are formed.

5. Method according to one of the preceding claims, **characterized in that** the reference voltage source (32) can be connected to the earth connection of the DC voltage power supply system (16, 18) via separate voltage dividers (52, 54) for each phase, with a divider connection (55) of the voltage dividers (52, 54) supplying a reference value for the current, which is predefined by the commutation pattern, in each case to the inverting input of the comparators (40, 42, 44), whereas the voltage value which corresponds to the difference between the phase voltage (Uₓ) and the star point voltage (Uₛ) is applied to the non-inverting input of the comparators (40, 42, 44) from the output of the associated adder (34, 36, 38).

6. Method according to one of the preceding claims, **characterized by** the ability to use it both in the basic rotation speed range and in the field-weakening range of the motor (10) at rotation speeds above the nominal rotation speed of the said motor.

7. Circuit arrangement for determining the rotor position without sensors and for operating a brushless DC motor (10) having a rotor preferably with permanent-magnet excitation, and having a preferably three-phase armature winding which is connected in star, and also having a control unit (26) for a semiconductor switching apparatus (24) for successively connecting the winding phases of the DC motor to a DC voltage power supply system (16, 18) as a function of the rotor position, with the control unit (26) being connected via in each case an adder (34, 36, 38) for the phase voltage (Uₓ, where x = 1, 2, 3), and the star point voltage (Uₛ) and also via in each case a comparator (40, 42, 44) for comparing the output voltage from the adder (34, 36, 38) with a reference value (U_{ref}) for the voltage drop which is generated across the internal resistor (R) of the phase by a predefined phase current (I_{ref}), **characterized in that** trigger signals (58) for the purpose of detecting the induced voltages (Uᵢ) by the control unit (26) are supplied by a further comparator (56) at the time at which the predefined motor current (I_{ref}) is reached, the said further comparator being connected, at one end, to a current sensor (22) in the DC voltage intermediate circuit (20) of the motor (10) and, at the other end, to a reference voltage source (32) for the voltage drop which is caused by the motor current (Iₓ, where x = 1, 2, 3), in the phases, with the voltage (+/-U_{ref}, earth) of the reference voltage source (32) being proportional to the voltage drop which is generated by the motor current (Iₓ) in the phase at the time at which a reference value (I_{ref}) is reached.

8. Circuit arrangement according to Claim 7, **characterized in that** the induced voltages (Uᵢ) are determined by analog difference formers (34, 36, 38, 40, 42, 44).

9. Circuit arrangement according to Claim 7 or 8, **characterized in that** the reference voltage source (32) is connected to the earth connection of the DC voltage power supply system (16, 18) via separate voltage dividers (52, 54) for each phase.

10. Apparatus according to one of Claims 7 to 9, **characterized in that** a divider connection (55) of the voltage dividers (52, 54) is connected to the inverting input of a comparator (40, 42, 44) in each case, the non-inverting input of the said comparator being connected to the output of the associated adder (34, 36, 38) and the output of the said comparator being connected to the control unit (26) for the semiconductor switching apparatus (24).

## Revendications

1. Procédé pour déterminer sans appareil transmetteur la position du rotor et pour faire fonctionner un moteur à courant continu sans balais (10) qui présente un rotor (12) excité de préférence par un aimant permanent et un bobinage d'induit de préférence triphasé en étoile ainsi qu'une unité de commande (26) pour un commutateur à semi-conducteur (24) qui branche successivement les bobinages du moteur à courant continu (10) sur un réseau à tension continue (16, 18) en fonction de la position du rotor, un signal de sortie d'un totalisateur (34, 36, 38) formé chaque fois par la différence entre une tension de phase (Uₓ, avec x = 1, 2, 3) et une tension au point neutre (Uₛ) étant comparé dans un comparateur subordonné (40, 42, 44) avec une valeur de la chute de tension générée aux bornes de la résistance interne (R) de la phase par un courant de phase prédéterminé (I_{ref}) et permettant de déterminer les tensions induites (Uᵢₓ) avec x = 1, 2, 3 ainsi que leurs passages par zéro,
**caractérisé en ce que**
un signal de déclenchement (58) dérivé d'un courant de somme des phases (I) est acheminé dans l'unité de commande (26) pour déterminer les moments de saisie de valeurs de référence des tensions induites dans les différentes phases (Uᵢₓ, avec x = 1, 2, 3) comme critère pour la production de signaux de commutation (30) du commutateur à semi-conducteur (24) ou comme signal de position du rotor, une source de tension de référence (32) étant utilisée pour reproduire la chute de tension générée dans une phase par la valeur de référence (I_{ref}) du courant de moteur (Iₓ, avec x = 1, 2, 3), dont la tension (+/- Uref, masse) est proportionnelle à la chute de tension générée par le courant de moteur (Iₓ) dans la phase au moment où il atteint sa valeur de référence (I_{ref}).

2. Procédé selon la revendication 1, **caractérisé en ce que** les courants de phase (Iₓ) et le courant de somme des phases (I) sont déterminés par un capteur de courant (22) prévu dans le circuit intermédiaire à tension continue (20) du commutateur à semi-conducteur (24).

3. Procédé selon la revendication 1 ou 2, **caractérisé en ce que** le courant de somme de phases (I) déterminé par le capteur de courant (22) est contrôlé dans un comparateur supplémentaire (56) lorsqu'une valeur prédéterminée de référence (I_{ref}) correspondant au couple et à la vitesse de rotation demandés est atteinte, le comparateur supplémentaire (56) délivrant le signal de déclenchement de l'unité de commande (26) chaque fois que la valeur de référence (U_{ref}) est atteinte.

4. Procédé selon l'une quelconque des revendications précédentes, **caractérisé en ce que** la tension (+U_{ref}) de la source de tension de référence (32) sert de valeur de comparaison pour le comparateur supplémentaire (56) lors de la formation des signaux de déclenchement (58) de l'unité de commande (26).

5. Procédé selon l'une quelconque des revendications précédentes, **caractérisé en ce que** la source de tension de référence (32) peut être raccordée par l'intermédiaire de diviseurs de tension distincts (52, 54) prévus pour chaque phase à la masse du réseau de tension continue (16, 18), une borne (55) des diviseurs de tension (52, 54) délivrant à chaque fois à l'entrée inversante des comparateurs (40, 42, 44) une valeur de référence du courant prédéterminé par le motif de commutation, la valeur de tension correspondant à la différence entre la tension de phase (Uₓ) et la tension de déplacement du point neutre (Uₛ) à la sortie des totalisateurs subordonnés (34, 36, 38) étant appliquée à l'entrée non inversante des comparateurs (40, 42, 44).

6. Procédé selon l'une quelconque des revendications précédentes, **caractérisé en ce qu'**il peut être appliqué tant dans la plage fondamentale des vitesses de rotation de base que dans la plage d'affaiblissement du champ du moteur (10) lorsque sa vitesse de rotation est supérieure à sa vitesse de rotation nominale.

7. Circuit pour déterminer sans appareil transmetteur la position du rotor et pour faire fonctionner un moteur à courant continu sans balais (10) qui présente un rotor excité de préférence par un aimant permanent et un bobinage d'induit de préférence triphasé en étoile ainsi qu'une unité de commande (26) pour un commutateur à semi-conducteur (24) qui branche successivement les phases de bobinage du moteur à courant continu sur un réseau de tension continue (16, 18) en fonction de la position du rotor, l'unité de commande (26) étant raccordée chaque fois par un additionneur (34, 36, 38) qui additionne la tension de phase (Uₓ, avec x = 1, 2, 3) et la tension du point neutre (Uₛ) ainsi que par un comparateur (40, 42, 44) qui compare la tension de sortie du totalisateur (34, 36, 38) avec une valeur de référence (U_{ref}) de la chute de tension générée par un courant de phase (I_{ref}) prédéterminé aux bornes de la résistance interne (R) de la phase, **caractérisé en ce que**
pour détecter les tensions (Uᵢ) induites par l'unité de commande (26) au moment où est atteint le courant moteur prédéterminé (I_{ref}), des signaux de déclenchement (58) sont délivrés par un comparateur supplémentaire (56), le comparateur étant relié d'une part à un capteur de courant (22) du circuit intermédiaire de tension continue (20) du moteur (10) et d'autre part à une source de tension de référence (32) de la chute de tension occasionnée dans les phases par le courant moteur (Iₓ, avec x = 1, 2, 3), la tension (+/- U_{ref}, masse) de la source de tension de référence (32) étant proportionnelle à la chute de tension générée par le courant moteur (Iₓ) dans la phase au moment où il atteint sa valeur de référence (I_{ref}).

8. Circuit selon la revendication 7, **caractérisé en ce que** les tensions induites (Uᵢ) sont déterminées par des soustracteurs analogiques (34, 36, 38, 40, 42, 44).

9. Circuit selon la revendication 7 ou 8, **caractérisé en ce que** la source de tension de référence (32) est raccordée à la masse du réseau de tension continue (16, 18) par l'intermédiaire de diviseurs de tension distincts (52, 54) pour chaque phase.

10. Dispositif selon l'une des revendications 7 à 9, **caractérisé en ce que** chaque borne (55) des diviseurs de tension (52, 54) est reliée à l'entrée inversante d'un comparateur (40, 42, 44) dont l'entrée non inversante se trouve à la sortie du totalisateur (34, 36, 38) subordonné et dont la sortie est reliée à l'unité de commande (26) du commutateur à semi-conducteur (24).
